# EUROPEAN PATENT APPLICATION

(11) **EP 1 241 800 A1**
(43) Date of publication of application: **18.09.2002**
(21) Application number: 01302332.0
(22) Date of filing: 14.03.2001
(51) Int. Cl.: H04B 3/54, H04B 3/56

(54) **Data communication device for power line network**

(71) Applicant: Cyan Technology Limited, Willingham, Cambridge, CB4 5ES (GB)
(72) Inventor: Davies, Christopher, Fen Drayton, Cambridge, CB4 5SL (GB)
(74) Representative: Brunner, Michael John

(57) **Abstract**

The invention described is data communications device **4,5,6** for providing narrowband signalling across a mains electrical supply circuit 3. The device includes a control interface **41,51,61** for connecting a personal computer or other apparatus. A modulator/demodulator **42,52,62** is provided for receiving data from and outputting data to the control interface through a first input/output port **43,53,63** and outputs and receives communications signals through a second input/output port **44,54,64.** An electromechanical transducer/filter **70** has a first pair of electrodes **73-76f,73-76r** which are coupled to the second input/output port of the modulator/demodulator, and a second pair of electrodes **72f,72r** forcoupling to the mains supply circuit so that communications signals can be passed into and out of the mains supply circuit.

## Description

The present invention relates to data communications devices and, more particularly, to devices capable of transmitting data signals over consumers' electrical mains supplies.

Systems have been developed to allow electrical communication, for example, for telecommunications purposes or to provide local area network (LAN) functionality, within premises, using signals carried by the mains supply. However, such systems as the CEBus (USA) system utilise broadband signalling and the cost of the active circuit components required to attach equipment to the mains to provide such signalling, even with suitable chipset integration, is too high to enable such systems to be provided to consumers at reasonable cost. Furthermore, in Europe at least, there are also regulatory restrictions on the frequencies that can be used and the equipment that can be attached to the mains supply.

There is a need therefore to provide equipment, which can provide narrowband signalling using relatively low frequencies for which there are no imposed restrictions on connectivity. An essential component of such equipment is the transducer by means of which the signals, generated in the equipment or supplied to the equipment from the mains, are transmitted into or out of the conductors of the mains supply.

According to the present invention there is provided a data communications device for providing narrowband signalling across a mains electrical supply, the device including
a control interface;
a modulatorand/ordemodulatorforrespectively receiving data from or outputting data to the control interface through a first input/output port and respectively outputting or receiving communications signals through a second input/output port; and
an electromechanical transducer/filter having
   at least a first pair of electrodes coupled to the second input/output of the modulator and/or demodulator, and
   a second pair of electrodes for coupling to a mains supply
   whereby said communications signals can be passed respectively into or out of said mains supply.

Preferably, the electromechanical transducer/filter comprises a piezoelectric component. This may be in the form of a beam or plate for example.

By arranging for the mechanical resonant frequency of the electromechanical transducer/filter to be substantially the same as or at least close to the desired carrier frequency of the communications signals to be transmitted across the mains supply the transduction can be optimised. By positioning the pairs of electrodes to be responsive to the mode of mechanical resonance at the chosen frequency while positioning them to be poorly or non-responsive to other modes, the transducer/filter can provide inherent narrowband filtering.

The desired electrical isolation between the mains supply and the circuitry of the device can be provided by the inherently low electrical coupling between the first pair(s) and second pair of electrodes. The first set of electrodes may, for example, comprise four mechanically parallel pairs of electrodes, which enables impedance transformation over a range of ratios from 16:1 to 1:16 to be provided by selection of appropriate series-parallel connections to the first pairs of electrodes.

Such a device is capable of providing inherently filtered narrowband signalling at carrier frequencies below say 140 kHz, for example at 100 kHz. Appropriate modulation techniques (such as FSK (frequency shift keying) or OctaIPSK (octal phase shift keying) and suitable messaging and encoding protocols capable of operating in an electrically 'noisy' environment can be used in the device. By using a single passive component for the transducer/filter significant simplification and cost reduction can be achieved.

Examples of devices constructed in accordance with the present invention will now be described with reference to the accompanying drawings, in which:-
Figure 1 is a diagrammatic representation of a network of components in an example consumer system;
Figure 2 illustrates an exemplary transducer/filter in longitudinal section;
Figure 3 illustrates the same component from one side, the other side being a mirror image; and
Figure 4 is a perspective view of an alternative form of the transducer/filter.

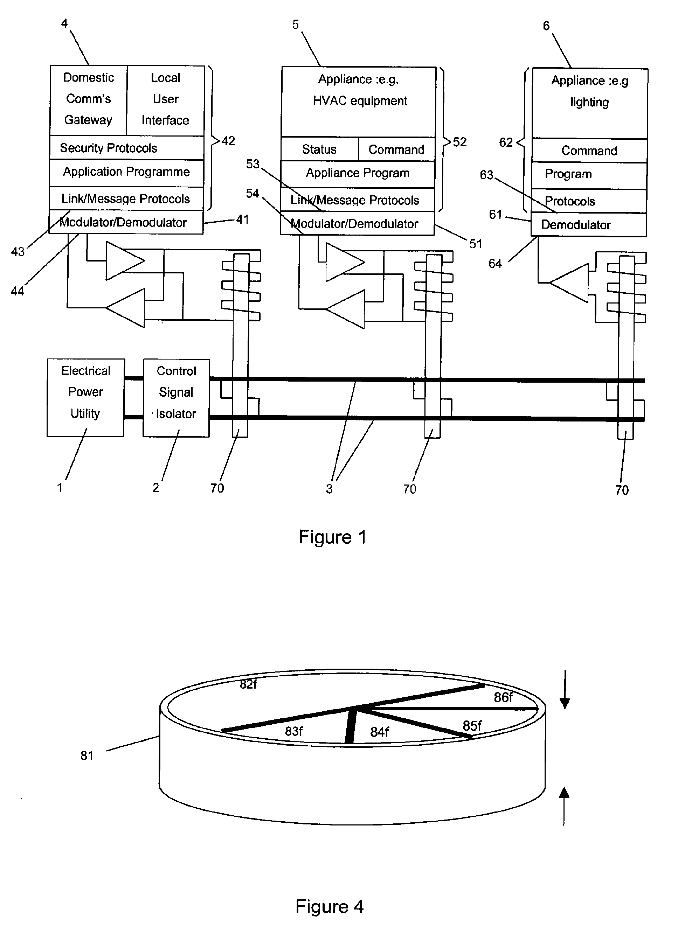

Figure 1 shows an exemplary consumer system incorporating data communications devices according to the invention. A mains power supply 1 is shown, supplying, via a control signal isolator 2 and a mains power circuit 3. The control signal isolator will conventionally consist of inductors, transformers and capacitors connected as a filter which will pass low frequency signals (e.g. 50Hz or 60Hz ), but prevent transmission of higher frequencies ( e.g. 70KHz to 140KHz ). Three controller/communications devices 4,5,6 are shown as connected to the mains power circuit 3, each comprising a respective control interface 42,52,62, these being of different types to meet the different requirements of the controllers. The first controiler/communications device 4 provides for attachment of a personal computer network or a public communications service and has circuitry and embedded software appropriate to that task. The second device 5 enables connection to an appliance such as HVAC equipment and again has circuitry and embedded software appropriate to that task. The third device 6 enables connection to a passive domestic or office appliance such as a lighting circuit and again has circuitry and embedded software appropriate to that task.

The respective control interfaces 42,52,62 communicate, through respective first ports 43,53,63, with a corresponding modulator/demodulator or demodulator 41,51,61 for generating or receiving data signals respectively to be supplied to or received from the network created across the mains power circuit 3. In the case of a passive circuit such as a lighting circuit, the controller 6 only requires a demodulator 61 as it provides no data to the network. The modulator/demodulators 41,51 or demodulator 61 connect to the mains power circuit 3 through second ports 44,54,64 and via a transducer/filter 70 which converts data signals from the respective modulator/demodulator into narrowband signals for transmission across the mains power circuit 3 and correspondingly converts such signals into data signals for supply back to the modulator/demodulator(s) as appropriate.

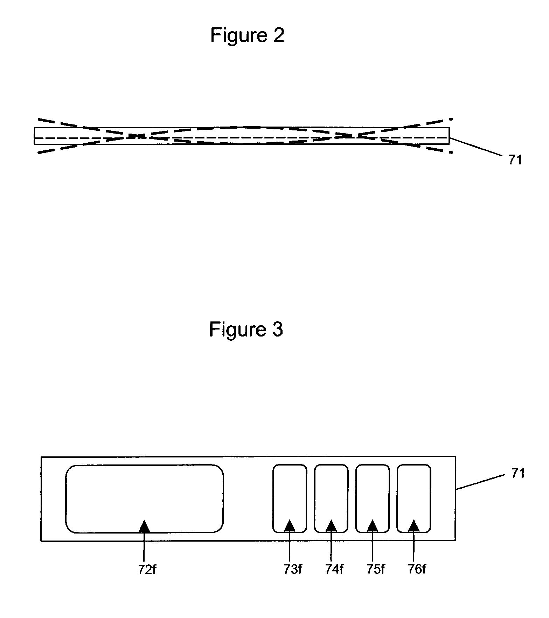

Each transducer/filter 70 comprises a piezoelectric beam element 71 (see Figures 2 & 3). The beam element 71 is a piezoelectric bimorph in which the direction of polarisation of the material between the faces and the centre are in opposition across the thickness of the beam. The beam 71 is induced to bend by applying voltages between an electrode pair, for example, 72f and 72r (front and rear respectively). This occurs because an applied voltage causes one side of the piezoelectric beam to become slightly thinner and because the sides are joined this causes stress, which bends the beam. When the signal is applied at the lowest resonant frequency of the beam, it is induced to vibrate. In this state, similar coupling exists between the mechanical vibration and electrical signals on further electrode pairs 73-76. As a result, a coupling is established between electrode pairs 72 & 73-76 through the mechanical vibration.

This coupling between one electrode pair and another is frequency selective due to the resonance of the mode of vibration of the piezoelectric beam 71. Impedance transformation is achieved in the component shown by varying the electrical connection of the electrodes. If the B electrodes are connected in series rather than in parallel, for example, a 16:1 impedance transformation will result.

Effective electrical isolation between the electrode sets 72 & 73-76 is achieved by the separation of the electrode sets along the beam.

The mode of vibration is indicated by the two dotted lines, which overlay the top view of the component shown in Figure 2. Physical connections to the electrode pairs are preferably situated close to the nodes of the vibration mode. Near resonance, the sensitivity of the electrode pairs is approximately proportional to the electrode areas.

The use of these transducer/filter components to connect network and appliance controllers via a powerline connection is then as shown in Figure 1. In this figure, the electrode pair 72f, 72r are connected directly to the powerline circuit 3. The electrodes 73-76 are connected in series: 73r to 74f, 74r to 75f and 75r to 76f. Under these conditions the voltage appearing between the electrodes 73f and 76r will be approximately four times that between 72f and 72r and this can be applied to the respective modulator/demodulator 41.51.61.

To establish a link through the powerline 3, it may be necessary to couple up to one watt of signal at 100KHz onto the powerline at an impedance of about one ohm. By using the transformation ratio available by series connection of the electrode pairs 73-76, the required signal power may be more conveniently generated at an impedance of about 16 ohm by a bridge drive (details not shown) to the transducer/filter components 70 from CMOS level signals on a standard 5V supply (ie ~4V x 250mA peak). Because of the inherently narrowband coupling it is possible to use square-wave voltage drive which is simple and efficient, without transmitting significant levels of the harmonic components of the square wave.

An alternative implementation of the transducer/filter 80 is shown in Figure 4. This uses thickness resonance of a unimorph plate 81 as indicated by the arrows. This configuration is appropriate to different combinations of material and operating frequency. As before, two sets of electrodes 82 & 83-86 of differing areas are created on opposite faces. A circular segment of plate is used because of the simpler resonant characteristics, but other configurations are usable. As before, the electrode pairs are linked by the resonant vibrational mode producing similar electrical coupling to each electrode pair. The electrodes are labelled as before, with electrodes of equivalent function retaining the same names. The electrodes 82r through 86r, are located on the underside or rear and are not visible in the figure.

## Claims

1. A data communications device for providing narrowband signalling across a mains electrical supply, the device including
a control interface;
a modulatorand/ordemodulator for respectively receiving data from oroutputting data to the control interface through a first input/output port and respectively outputting or receiving communications signals through a second input/output port; and
an electromechanical transducer/filter having
at least a first pair of electrodes coupled to the second input/output of the modulator and/or demodulator, and
a second pair of electrodes for coupling to a mains supply
whereby said communications signals can be passed respectively into or out of said mains supply.

2. A device according to claim 1, wherein the electromechanical transducer/filter comprises a piezoelectric component.

3. A device according to claim 2, wherein the piezoelectric component comprises a beam.

4. A device according to claim 2, wherein the piezoelectric component comprises a plate.

5. A device according to any of claims 1 to 4, wherein the mechanical resonant frequency of the electromechanical transducer/filter is arranged to be substantially the same as the carrier frequency of the communications signals to be transmitted.

6. A device according to any of claims 1 to 5, wherein the pairs of electrodes are arranged to be responsive to the mode of mechanical resonance at the carrier frequency of the communications signals to be transmitted.

7. A device according to any of claims 1 to 6, wherein the pairs of electrodes are arranged to be to be poorly or non-responsive to modes of mechanical resonance other than the carrier frequency of the communications signals to be transmitted, whereby the

8. A device according to any of claims 1 to 7, wherein said at least first set of electrodes comprises plural pairs of electrodes.

9. A device according to claim 8, wherein said plural pairs of electrodes comprise four mechanically parallel pairs of electrodes.

10. A computer network adapter including a device according to any of claims 1 to 9.

11. A communications network comprising a plurality of devices according to any of claims 1 to 10 and a mains power circuit.

12. A communications network according to claim 11, including a control signal isolator between the mains power circuit and a mains supply connected to supply power thereto.
